# EUROPÄISCHE PATENTSCHRIFT

(11) **EP 1 808 468 B1**
(45) Veröffentlichungstag und Bekanntmachung des Hinweises auf die Patenterteilung: **31.03.2010**
(21) Anmeldenummer: 06127322.3
(22) Anmeldetag: 28.12.2006
(51) Int. Cl.: B32B 15/088, B32B 15/092, B32B 7/12, C09J 5/06

(54) **REAKTIVE SCHMELZKLEBSTOFFE ENTHALTENDE HYBRIDBAUTEILE**
HYBRID COMPONENTS CONTAINING REACTIVE HOT MELT ADHESIVES
COMPOSANTS HYBRIDES CONTENANT DES MATIÈRES ADHÉSIVES À FONDRE RÉACTIVES

(30) Priorität: 17.01.2006 DE 102006002125
(43) Veröffentlichungstag der Anmeldung: 18.07.2007
(73) Patentinhaber: Degussa AG, 40474 Düsseldorf (DE)
(72) Erfinder: Risthaus, Martin, 46286, Dorsten (DE); Wönicker, Hans-Joachim, 70565, Stuttgart (DE)

(56) Entgegenhaltungen:
- WO-A-2005/035685
- DE-A1- 10 361 096

## Beschreibung

Die Erfindung beschreibt den Einsatz von reaktiven Schmelzklebstoffen in Hybridbauteilen (Strukturbauteilen). Strukturbauteile sind Komponenten mit untergeordneten Sichtanforderungen, die im Fahrzeugbau sowie im Flugzeugbau im Bereich tragender Teile sowie kraftaufnehmender Teile zum Einsatz kommen und sich insbesondere dadurch auszeichnen, dass sie lokale Verstärkungen aufweisen, die dem Bauteil besondere mechanische Eigenschaften verleihen. Besonders hervorzuheben ist die Erhöhung der Torsionssteifigkeit bei zusätzlicher Gewichtsreduzierung verglichen mit bisher eingesetzten Komponenten.

Die in dieser Erfindung beschriebenen Hybridbauteile zeichnen sich besonders dadurch aus, dass sie aus einem Verbund aus vornehmlich Metallen mit Polymeren bestehen. Hierbei wird in ein Metallbauteil eine Polymerstruktur mittels Spritzgussverfahren eingefügt, die dem Bauteil die entsprechende Torsions- und Crashsteifigkeit verleiht bei zusätzlich vergleichsweise geringem Gewicht.

Der Schwachpunkt dieser beschriebenen Hybridbauteile war bisher die Anbindung des Polymers an den metallischen Werkstoff. Hier entsteht durch Materialschrumpf und unterschiedliche Ausdehnungskoeffizienten der verschiedenen Materialien eine Enthaftung der Komponenten, was zur Verschlechterung der mechanischen Eigenschaften führt. Derzeit werden strukturbildende Hybridbauteile in der Weise produziert, dass in einen metallischen Werkstoff ein polymerer Werkstoff mittels Spritzgusstechnik eingespritzt wird. Das Problem dieser Stoffverbindung stellt der Übergang zwischen dem Polymer und dem Metall dar, da die Materialien unterschiedliche mechanische Eigenschaften aufweisen, welche dazu führen, dass die Festigkeit des Verbundes z.B. durch Schwindung des Polymers negativ beeinflusst wird und somit die Torsionssteifigkeit der Bauteile ebenso negativ beeinflusst wird.

DE 103 61 096 offenbart ein Verfahren zur Herstellung von Hybridbauteilen, bestehend aus Metallen und Polymeren, wobei die Metalle mit den Polymeren durch Schmelzklebstoffe auf Copolyamid-Basis verbunden werden. Als geeignete Schmelzklebstoffe werden Copolyamide auf Basis von PA12 genannt. Zur Nachhärtung der als Haftvermittlerschicht dienenden Thermoplastfolie werden Epoxidharze genannt.

Es wurde nun überraschend, gemäß den Ansprüchen, gefunden, dass durch den Einsatz von reaktiven Klebstoffen die Nachteile des Standes der Technik überwunden werden konnten.

Durch die Vorbeschichtung des metallischen Bauteils mit aufbauenden, auf Laurinlactam basierenden Schmelzklebstoffen wird eine wesentlich bessere Anbindung der beiden Komponenten und eine verbesserte Korrosionsbeständigkeit der Hybridbauteile erzeugt. Dieser Effekt kann noch verbessert werden, wenn dem verwendeten Schmelzklebstoff zusätzlich blockierte Isocyanate, die aufbauend im Molekulargewicht wirken sowie Epoxide, die haftverbessernd und vernetzend wirken, zugesetzt werden. Der Molekulargewichtsaufbau wird durch die für das Bauteil aus Korrosionsschutzgründen notwendige Kathodische Tauchlackierung (KTL-Lackierung) gefördert, da die Verweilzeit von mehr als 25 Minuten in der Tauchlackierung bei Temperaturen oberhalb 150°C die für diese Bauteile benötigte erhöhte Kohäsionsfestigkeit und Adhäsionsfestigkeit generiert. Rein thermoplastische Schmelzklebstoffe würden bei den genannten Temperaturbelastungen bereits thermisch abbauen und somit die mechanischen Eigenschaften des Bauteils negativ beeinflussen. Der beschriebene Schmelzklebstoff zeigt generell sehr gute Affinitäten zu metallischen Werkstoffen und kommt in den Hybridbauteilen als Haftvermittler zwischen dem Metall und dem Polymer zum Einsatz.

Weiterer Vorteil des eingesetzten Schmelzklebstoffs ist die Verbesserung der Korrosionsbeständigkeit. Bisher traten Probleme im Bereich der stoffschlüssigen Verbindung zwischen dem Metall und der Spritzgussmasse auf, da durch die zuvor beschriebene geringe Schwindung des Polymers ein geringer Spalt entsteht, in dem keine KTL-Lackierung vorhanden ist und somit Korrosion am unbehandelten Metall entsteht. Die Vorbeschichtung mit dem reaktiven Schmelzklebstoff gleicht die Schwindung aus und verhindert eine korrosionsanfällige Spaltbildung.

Die Erfindung besteht nun darin, auf den metallischen Werkstoff einen Primer (Schmelzklebstoff) aufzutragen, der den Verbund wesentlich verbessert und somit das besonders im Fahrzeugbau geforderte Crashverhalten positiv beeinflusst.

Bei dem Primer handelt es sich um ein auf Laurinlactam basierendes Copolyamid mit einem Anteil von 2,5 bis 15%, vorzugsweise 4 bis 6 %, blockiertem Isocyanat und 2,5 bis 10%, vorzugsweise 4 bis 6 %, Epoxid. Diese Zusatzstoffe schaffen im Vergleich zu rein thermoplastischen Copolyamiden einen noch wesentlich besseren Verbund zu metallischen Werkstoffen und sorgen unter Temperatureinfluss für einen Molekulargewichtsaufbau, welcher die Temperaturstabilität der Verbindung deutlich verbessert. Entscheidend für den Molekulargewichtsaufbau ist die Dauer der Temperaturbeaufschlagung. Als optimal erwiesen sich 150 °C bis 190 °C für eine Dauer von 10 bis 30 Minuten, wie man sie üblicherweise im KTL-Ofen vorfindet.

Bei den verwendeten Schmelzklebstoffen handelt es sich z.B. um die VESTAMELT-Typen der Firma Degussa:
- X1038-P1: 60% Laurinlactam + 25% Caprolactam + 15% AH-Salz (Mischung aus 50% Adipinsäure und 50% Hexamethylendiamin)
- X1316-P1: 95% VESTAMELT X1038-P1 + 5% VESTAGON BF1540-P1
- X1333-P1: 95% VESTAMELT X1038-P1 + 5% VESTAGON BF1540-P1 + 5% Araldite GT7004

Das Verfahren zeichnet sich dadurch aus, dass ein Metallprofil zunächst mit einem Copolyamid-Schmelzklebstoff vollflächig oder partiell mittels elektrostatischer Sprühpistole bzw. über geeignete Lacksysteme beschichtet wird und anschließend auf ca. 150 °C über einen Zeitraum von ca. 120 bis 300 Sekunden, bevorzugt ca. 150 Sekunden, erhitzt wird, um den Klebstoff anzuschmelzen. Als Folgeschritt wird eine Polymerstruktur mittels Spritzgußtechnologie eingespritzt. Dieses strukturbildende Bauteil durchläuft dann einen KTL-Ofen zur Lackierung. Die KTL-Lackierung findet bei ca. 190 °C über eine Dauer von ca. 30 Minuten statt.

Die erfindungsgemäßen Hybridbauteile finden Anwendungen im Fahrzeugbau, in der Luftfahrtindustrie, im Schienenbau usw., typische Anwendung ist im Bereich von Front-Ends (Stoßfängern) zu finden.

### Beispiele

Zur Verdeutlichung der Haftungsverbesserung wurden Zugversuche an entsprechenden Metall/Kunststoffverbunden durchgeführt, die mittels verschiedener VESTAMELT-Schmelzklebstoffe gefügt wurden. Zur Hervorhebung des Temperatureinflusses wurden sowohl Proben vor wie auch nach KTL-Behandlung (190 °C, 30 Min.) untersucht. Unbehandelte, ohne Primer (Schmelzklebstoff) ausgerüstete Musterteile weisen eine sehr geringe Haftung auf, die wie im Diagramm gezeigt, durch den Einsatz von Polyamid-Schmelzklebstoffen wesentlich verbessert werden kann. Hierdurch werden die mechanischen Eigenschaften späterer Bauteile enorm verbessert, so dass dem Einsatz als strukturbildendes Bauteil eine wesentlich größere Bedeutung zukommt.

Die Metalle sollten vor der Beschichtung entfettet werden, um gleichmäßige Oberflächen vorzuweisen und eine Streuung in den Haftwerten zu vermeiden. Weiterhin ist eine Vorwärmung der Metallteile auf 60 bis 80 °C für die Benetzung von Vorteil.

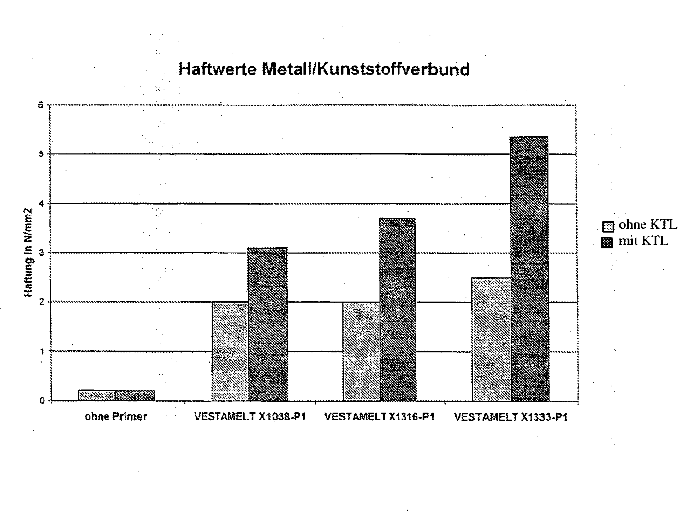

## Patentansprüche

1. Verfahren zur Herstellung von Hybridbauteilen, bestehend aus Metallen und Polymeren
**dadurch gekennzeichnet,**
**dass** die Metalle mit den Polymeren durch Schmelzklebstoffe auf Copolyamid-Basis, die zusätzlich Isocyanat und Epoxid enthalten, verbunden werden.

2. Verfahren nach Anspruch 1,
**dadurch gekennzeichnet,**
**dass** ein Copolyamid auf Basis von Laurinlactam eingesetzt wird.

3. Verfahren nach einem der vorhergehenden Ansprüche,
**dadurch gekennzeichnet,**
**dass** der Schmelzklebstoff 2,5 bis 15 % blockiertes Isocyanat und 2,5 bis 10 % Epoxid enthält.

4. Verfahren nach einem der vorhergehenden Ansprüche,
**dadurch gekennzeichnet,**
**dass** das Metall mit dem Schmelzklebstoff vollflächig oder partiell mittels elektrostatischer Sprühpistole bzw. über geeignete Lacksysteme beschichtet und bei 150 °C ca. 150 s angesintert wird.

5. Verfahren nach Anspruch 3,
**dadurch gekennzeichnet,**
**dass** das Hybridbauteil anschließend einen Kathodischen Tauchlackierungs-Ofen zur Lackierung durchläuft.

6. Hybridbauteil hergestellt nach einem der vorhergehenden Ansprüche für den Einsatz im Fahrzeugbau oder Flugzeugbau.

## Claims

1. Process for producing hybrid components composed of metals and polymers, **characterized in that** the metals are bonded to the polymers by copolyamide based hotmelt adhesives additionally containing isocyanate and epoxide.

2. Process according to Claim 1, **characterized in that** a copolyamide based on laurolactam is used.

3. Process according to any one of the preceding claims, **characterized in that** the hotmelt adhesive contains 2.5% to 15% of blocked isocyanate and 2.5% to 10% of epoxide.

4. Process according to any one of the preceding claims, **characterized in that** the metal is coated, over its full area or partially, with the hotmelt adhesive, by means of electrostatic spray gun or by way of suitable coating systems, and is incipiently sintered at 150°C for approximately 150 s.

5. Process according to Claim 3, **characterized in that** the hybrid component subsequently passes through an EC oven for coating.

6. Hybrid component produced according to any one of the preceding claims, for use in vehicle construction or aircraft construction.

## Revendications

1. Procédé pour la production de pièces de construction hybrides, constituées par des métaux et des polymères, **caractérisé en ce que** les métaux sont assemblés avec les polymères par des adhésifs en masse fondue à base de copolyamide, qui contiennent en outre des groupes isocyanate et époxyde.

2. Procédé selon la revendication 1, **caractérisé en ce qu'**on utilise un copolyamide à base de lactame laurique.

3. Procédé selon l'une quelconque des revendications précédentes, **caractérisé en ce que** l'adhésif en masse fondue contient 2,5 à 15% d'isocyanate bloqué et 2,5 à 10% d'époxyde.

4. Procédé selon l'une quelconque des revendications précédentes, **caractérisé en ce que** le métal est revêtu par l'adhésif en masse fondue sur toute sa surface ou en partie au moyen de pistolets de pulvérisation électrostatiques ou via des systèmes de laque appropriés et est fritté 150°C pendant environ 150 s.

5. Procédé selon la revendication 3, **caractérisé en ce que** la pièce de construction hybride passe ensuite dans un four de laquage par immersion cathodique pour le laquage.

6. Pièce de construction hybride produite selon l'une quelconque des revendications précédentes destinée à une utilisation dans la construction de véhicules ou aéronautique.
